# EUROPÄISCHE PATENTANMELDUNG

(11) **EP 4 006 693 A1**
(43) Veröffentlichungstag der Anmeldung: **01.06.2022**
(21) Anmeldenummer: 21210778.3
(22) Anmeldetag: 26.11.2021
(51) Int. Cl.: G06F 1/16

(54) **VORRICHTUNG ZUM VERBINDEN VON ELEKTRONISCHEN GERÄTEN**

(30) Priorität: 27.11.2020 DE 102020131526
(71) Anmelder: Birkmaier, Stephan, 86482 Aystetten (DE); Fuchs, Andreas, 85579 Neubiberg (DE); Schuhwerk, Benedikt, 86476 Neuburg an der Kammel (DE)
(72) Erfinder: Birkmaier, Stephan, 86482 Aystetten (DE); Fuchs, Andreas, 85579 Neubiberg (DE); Schuhwerk, Benedikt, 86476 Neuburg an der Kammel (DE)
(74) Vertreter: Stolmár & Partner Patentanwälte PartG mbB

(57) **Zusammenfassung**

Die Erfindung betrifft eine Vorrichtung zum Verbinden von elektronischen Geräten, insbesondere von Computer-Peripheriegeräten, umfassend eine Haltevorrichtung zum Verbinden von wenigstens zwei der Computer-Peripheriegeräte, wobei die Haltevorrichtung wenigstens zwei Halteelemente aufweist. Die Vorrichtung zeichnet sich dadurch aus, dass die wenigstens zwei Halteelemente an einem Ende jeweils mit einem der Computer-Peripheriegeräte und an einem anderen Ende derart drehbar miteinander verbunden sind, dass die Computer-Peripheriegeräte zusammenklappbar und mittels einer mit der Haltevorrichtung verbindbaren Tragvorrichtung tragbar sind.

## Beschreibung

Die vorliegende Erfindung betrifft eine tragbare Vorrichtung zum Verbinden von elektronischen Geräten, insbesondere von Computer-Peripheriegeräten, nach dem Oberbegriff von Anspruch 1.

### STAND DER TECHNIK

In der heutigen Zeit werden immer mehr Arbeitsplätze in Unternehmen mobil gestaltet oder als Home-Office in die häusliche Umgebung der Mitarbeiter ausgelagert. Dabei stellt der Arbeitgeber in aller Regel auch die dafür notwendige Ausrüstung zur Verfügung. Ein Laptop, der normalerweise in der häuslichen Umgebung benutzt wird, schafft dabei aufgrund der beschränkten Bildschirmgröße grundsätzlich nicht den gewohnten Komfort, zumal heute viele Büro-Arbeitsplätze mit mehreren Bildschirmen, die größere Abmessungen als die modernen Laptops aufweisen, ausgestattet sind.

Es ist bekannt, für Laptops sogenannte Dockingstations vorzusehen, an welcher alle erforderlichen Peripheriegeräte (Bildschirme, Tastatur, Maus und andere) angeschlossen bleiben, so dass beim erneuten Verbinden des Laptops mit der Dockingstation schnell Betriebsbereitschaft hergestellt werden kann. Eine besonders einfache Verbindung zwischen einer Dockingstation und einem Laptop ist mittels einer USB-C-Schnittstelle herstellbar. Sowohl ein Firmenarbeitsplatz als auch ein Home-Office-Arbeitsplatz erfordern dann aber das Vorhalten zweier Dockingstationen samt aller damit verbundenen Peripheriegeräte, wenn der Mitarbeiter mit seinem Laptop zwischen beiden pendelt.

Ein sehr wichtiger Aspekt bei dem mobilen Arbeiten bzw. bei einer Home-Office-Tätigkeit ist der begrenzte Raum, in dem ein Unternehmer selbst oder ein Mitarbeiter seine Tätigkeit ausüben soll. Somit entsteht das Problem des Unterbringens nicht nur des Computers, sondern auch der weiteren für die Tätigkeit notwendigen Computer-Peripheriegeräte, wie einer Dockingstation, Maus und Tastatur sowie eines Netzteils, eines Kabels, einer Steckleiste sowie einer Stromverteilerleiste.

Des Weiteren erfordern viele Tätigkeiten und die dafür notwendigen Arbeitsplätze, wie oben erwähnt, nicht nur einen, sondern zwei oder sogar mehr Bildschirme, die in der häuslichen Umgebung nicht leicht untergebracht werden können, da sie viel Arbeitsplatz erfordern.

Aus der US 2004/195471 A1 ist eine Vorrichtung bekannt, bei der zwei Monitore an einer Halterung schwenkbar und gegeneinander verschiebbar angeordnet sind. Die Vorrichtung ermöglicht eine einigermaßen platzsparende Aufbewahrung der aus zwei Monitoren bestehenden Anzeigevorrichtung. Eine ähnliche weitere Vorrichtung ist aus der US 2018/0216776 A1 bekannt.

Bei den oben angeführten Vorrichtungen zum Stand der Technik erfordert jedoch die Halterung, auf der die Monitore angebracht und befestigt werden, ebenfalls viel Platz und ist kostspielig in der Herstellung.

Der Erfindung liegt somit die Aufgabe zugrunde, eine verbesserte Vorrichtung bereitzustellen, die einerseits besonders platzsparend, leicht zu handhaben und zu transportieren ist, und andererseits einen erhöhten Komfort für mobile Arbeitsplätze bietet.

### OFFENBARUNG DER ERFINDUNG

Die erfindungsgemäße Aufgabe wird durch die kennzeichnenden Merkmale des Patentanspruchs 1 gelöst.

Die erfindungsgemäße Vorrichtung zum Verbinden von elektronischen Geräten, insbesondere von Computer-Peripheriegeräten, umfasst eine Haltevorrichtung zum Verbinden von wenigstens zwei der Computer-Peripheriegeräte, wobei die Haltevorrichtung wenigstens zwei Halteelemente aufweist. Erfindungsgemäß sind die wenigstens zwei Halteelemente an einem Ende jeweils mit einem der Computer-Peripheriegeräte und an einem anderen Ende derart drehbar miteinander verbunden, dass die Computer-Peripheriegeräte zusammengeklappt und mittels einer mit der Haltevorrichtung verbindbaren Tragvorrichtung getragen bzw. transportiert werden können.

Somit können die miteinander in Verbindung stehenden elektronischen Geräte und insbesondere die Computer-Peripheriegeräte in einer einfachen Weise wie ein Handkoffer transportiert werden, wobei die ganze Vorrichtung sehr kompakt ist und den nötigen Schutz der Geräte gewährleistet.

Eine bevorzugte Ausführungsform der vorliegenden Erfindung sieht vor, dass eine Tragvorrichtung fest mit der Haltevorrichtung verbunden ist, so dass die Stabilität der ganzen Anordnung, bestehend aus der erfindungsgemäßen Vorrichtung und den damit verbundenen Geräten gewährleistet wird.

Eine weitere bevorzugte Ausführungsform der Erfindung sieht aber vor, die wenigstens eine Tragvorrichtung lösbar mit der Haltevorrichtung zu verbinden, was die Flexibilität während des Arbeitens mit den elektronischen Geräten erhöht, wobei lediglich für das Abstellen der zusammengeklappten Vorrichtung bzw. für den Transport, die Tragvorrichtung mit der Haltevorrichtung verbunden werden kann.

Vorzugsweise weist die wenigstens eine Tragvorrichtung wenigstens einen Haltegriff, zum Tragen der zusammengeklappten, tragbaren Vorrichtung, sowie wenigstens einen Träger auf, wobei der Träger an einem oberen Ende mit einem Haltegriff und an einem unteren Ende mit einem Ständer, welcher zum Abstellen des wenigstens einen der Computer-Peripheriegeräte dient, in Verbindung steht. Dabei kann der Haltegriff fest oder mittels eines Scharniers mit dem Träger verbunden sein. Es ist aber auch möglich, den Haltegriff zusätzlich mit dem Träger oder mit einem Traghebel zu verbinden und lediglich in der Transportstellung an diesen anzubringen.

Eine andere bevorzugte Ausführungsform der vorliegenden Erfindung sieht vor, dass die wenigstens eine Tragvorrichtung wenigstens einen Haltegriff zum Tragen der zusammengeklappten, tragbaren Vorrichtung sowie wenigstens einen Traghebel aufweist, wobei der Haltegriff starr oder drehbeweglich mit dem Traghebel verbunden sein kann.

Vorzugsweise ist der wenigstens eine Haltegriff mit dem wenigstens einen Traghebel, welcher seinerseits mit einem der Halteelemente in Verbindung steht, verbunden, wobei der Traghebel insbesondere teleskopartig ausgebildet ist. Somit kann der Traghebel leicht in der Tragvorrichtung versenkt und in einer Transportstellung herausgezogen werden, was die Vorrichtung besonders komfortabel macht.

Eine weitere besonders bevorzugte Ausführungsform der erfindungsgemäßen Vorrichtung sieht vor, dass der Traghebel und/oder der Haltegriff zwischen einer Benutzungsstellung und einer Transportstellung der Vorrichtung schwenkbar ist bzw. sind.

Die erfindungsgemäße Vorrichtung zeichnet sich weiterhin dadurch aus, dass die Haltevorrichtung Ausnehmungen zum Aufnehmen und Befestigen der wenigstens zwei

Computer-Peripheriegeräte aufweist. Dabei können alle oder nur einige der Computer-Peripheriegeräte fest oder lösbar mit der Vorrichtung verbunden sein, so dass die Flexibilität der gesamten Anordnung wesentlich erhöht wird.

Vorzugsweise ist die Haltevorrichtung geeignet, wenigstens zwei Bildschirme miteinander zu verbinden, wobei die wenigstens zwei Bildschirme in einer Transportstellung im Wesentlichen parallel zueinander ausgerichtet sind. Die Bildschirme können dabei mit den jeweiligen Displays zueinander ausgerichtet sein, was bei einer zusammengeklappten Anordnung und in der Transportstellung besonders bevorzugt ist, da die Bildschirme geschützt sind. Hierdurch ist eine besonders kompakte Transportposition gewährleistet, bei der die als Flachbildschirme ausgebildeten Bildschirme mit geringem Abstand parallel zueinander angeordnet sind.

Es ist aber auch denkbar und mit der erfindungsgemäßen Vorrichtung auch leicht realisierbar, dass die Bildschirme mit ihren Rückseiten zueinander ausgerichtet sind. Bei dieser Lösung werden dann die weiteren an der Vorrichtung angebrachten und befestigten Geräte zwischen und neben der Bildschirme untergebracht.

Vorzugsweise werden die wenigstens zwei Halteelemente mittels eines Scharniers drehbar miteinander verbunden, was die Flexibilität der Vorrichtung wesentlich erhöht. Das wenigstens eine Scharnier ermöglicht zum einen eine Schwenkung der Bildschirme aus einer einander zugewandten parallelen Transportposition in eine aufgeklappte, nebeneinanderliegende Benutzungsstellung der Bildschirme.

Bevorzugt weist die Haltevorrichtung wenigstens eine Rastvorrichtung auf, zur Sicherung einer Relativbewegung der Computer-Peripheriegerte zueinander und gegenüber der Haltevorrichtung.

Vorzugsweise wird beim Bewegen des Traghebels, der zwischen einer Transportstellung und einer Benutzungsstellung der Vorrichtung schwenkbar ist, in die Transportstellung die wenigstens eine Rastvorrichtung mit der Haltevorrichtung und/oder mit dem Haltegriff in Eingriff gebracht.

Gemäß einer vorteilhaften Weiterbildung der Erfindung weist die Haltevorrichtung wenigstens eine Aufnahme zur lösbaren Befestigung einer Tastatur, einer Maus, eines Computers, einer Dockingstation und/oder einer elektrischen Kontaktierungsvorrichtung auf.

Eine weitere bevorzugte Ausführungsform der Erfindung sieht vor, dass die Haltevorrichtung wenigstens eine Aufnahme zum Aufnehmen und Befestigen wenigstens einer Elektrobox, in welcher eine Dockingstation, ein Netzteil, eine Stromverteilerleiste, eine Steckerleiste, Kabel und weitere Elektrokomponente einbringbar sind, aufweist. Die Elektrobox kann vorzugsweise einen modularen Aufbau aufweisen, so dass diese leicht austauschbar und an der Halterung angebracht und befestigt werden kann.

Bevorzugt sind alle an der Halterung anbringbaren Peripheriegeräte mit einer zentralen Stromversorgung verbindbar, die bevorzugt mit der elektrischen Kontaktierungsvorrichtung verbindbar ist oder eine Baueinheit bildet. Für in einer Betriebsstellung von der Halterung entfernbare Peripheriegeräte, wie einer Tastatur oder einer Maus ist bevorzugt eine drahtlose Verbindung, beispielsweise über Bluetooth^{®}, vorgesehen und ferner in einer Aufbewahrungsposition an der Halterung, eine Kontaktierung mit einer bevorzugt drahtlosen Ladevorrichtung für in der Tastatur und der Maus aufgenommene aufladbare Energiespeicher.

Es ist weiterhin vorteilhaft, wenn die Haltevorrichtung für eine Verschiebung in horizontaler und/oder vertikaler Richtung und/oder für eine Drehung wenigstens eines der Bildschirme ausgebildet ist. Dadurch kann der Benutzer die für ihn besonders vorteilhafte Darstellungsweise wählen, in der beispielsweise ein Bildschirm Hochkant gestellt wird, während ein benachbarter Bildschirm in horizontaler Position bleibt. Durch die Verschiebung lässt sich auch ein im Rahmen der Größe der Halterung beliebiger Abstand zwischen den Bildschirmen herstellen.

Erfindungsgemäß ist vorgesehen, dass die Halterung für eine Einstellung unterschiedlicher relativer Winkelpositionen der wenigstens zwei Bildschirme ausgebildet ist. Dabei können die wenigstens zwei Bildschirme zueinander gedreht und auch unabhängig voneinander geneigt werden. Dadurch kann der Benutzer eine für ihn ergonomisch günstige und an die Lichteinstrahlung am Einsatzort angepasste Position der Bildschirme frei wählen.

### KURZE BESCHREIBUNG DER ZEICHNUNGEN

Weitere bevorzugte Ausführungsformen der Erfindung ergeben sich im Übrigen aus den Unteransprüchen und der nachfolgenden Beschreibungen bevorzugter Ausführungsformen. Diese werden anhand von Abbildungen näher erläutert.

Es zeigen:
- Fig. 1: eine Draufsicht auf eine erfindungsgemäße Vorrichtung mit zwei Bildschirmen in einer Benutzungsstellung mit zueinander angewinkelten Bildschirmen gemäß einer ersten Ausführungsform der Erfindung;
- Fig. 2: eine rückwärtige Ansicht der Vorrichtung mit zwei Bildschirmen in einer Benutzungsstellung mit zueinander angewinkelten Bildschirmen gemäß Fig. 1;
- Fig. 3: eine Draufsicht auf eine Vorrichtung mit zwei Bildschirmen in einer Benutzungsstellung mit zueinander angewinkelten Bildschirmen, gemäß einer zweiten Ausführungsform der Erfindung;
- Fig. 4: eine Draufsicht auf die Vorrichtung gemäß Fig. 3 mit den Bildschirmen in einer Anordnung auf einer geraden Linie;
- Fig. 5: eine rückwärtige Ansicht der Vorrichtung gemäß der zweiten Ausführungsform in einer zusammengeklappten Transportstellung;
- Fig. 6: eine Vorderansicht der Vorrichtung gemäß der zweiten Ausführungsform in der Transportstellung;
- Fig. 7: eine Seitenansicht der Vorrichtung gemäß einer dritten Ausführungsform in einer Transportstellung mit nach außen weisenden Bildschirmen;
- Fig. 8: eine Seitenansicht gemäß Fig. 7 von der gegenüberliegenden Seite;
- Fig. 9: eine Seitenansicht der Vorrichtung gemäß der zweiten Ausführungsform in einer Transportstellung mit nach innen weisenden Bildschirmen;
- Fig. 10: eine Seitenansicht gemäß Fig. 9 von der gegenüberliegenden Seite;
- Fig. 11: eine Draufsicht der Vorrichtung gemäß Fig. 9;
- Fig. 12: eine rückwärtige Ansicht der Vorrichtung gemäß Fig. 4;
- Fig. 13: eine Seitenansicht einer Vorrichtung in einer Benutzungsstellung mit einem nach unten geschwenkten Traghebel;
- Fig. 14: eine Seitenansicht einer Vorrichtung mit abgesenktem Bildschirm in Vorbereitung einer Transportstellung;
- Fig. 15: die Vorrichtung gemäß Fig. 14 mit teilweise nach oben geschwenktem Traghebel;
- Fig. 16: die Vorrichtung gemäß Fig. 15 mit vollständig nach oben geschwenktem Traghebel in der Transportstellung, mit einer in Eingriff befindlichen Rastvorrichtung;
- Fig. 17: eine Seitenansicht einer Vorrichtung mit abgesenktem Bildschirm in Vorbereitung einer Transportstellung;
- Fig. 18: die Vorrichtung gemäß Fig. 17 mit teilweise nach oben geschwenktem Traghebel;
- Fig. 19: die Vorrichtung gemäß Fig. 17 mit vollständig nach oben geschwenktem Traghebel in der Transportstellung, mit einer in Eingriff befindlichen Rastvorrichtung; und
- Fig. 20: eine rückwärtige Ansicht der Vorrichtung gemäß einer dritten Ausführungsform in Benutzungstellung mit Darstellung der Schwenk- und Verschiebemöglichkeiten der Bildschirme.

### AUSFÜHRUNGSFORMEN DER ERFINDUNG

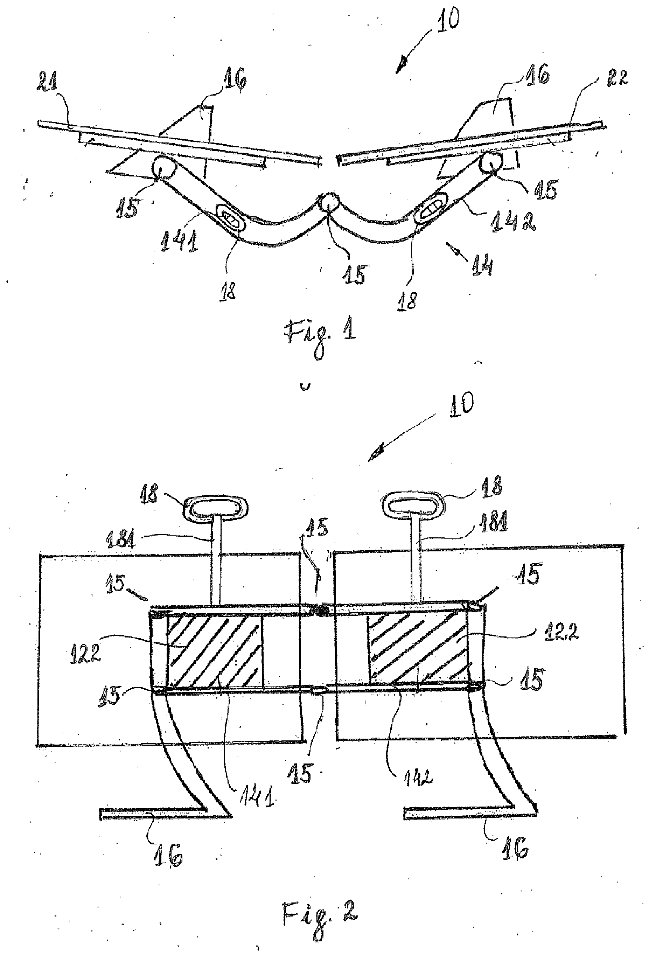

In Fig. 1 ist eine vereinfachte schematische Draufsicht auf eine erfindungsgemäße Vorrichtung 10, mit welcher zwei Bildschirme 21 und 22 miteinander verbunden sind, dargestellt. Dabei sind die Bildschirme 21 und 22 in einer Benutzungsstellung zueinander angewinkelt.

Fig. 2 zeigt eine rückwärtige Ansicht der in Figur 1 dargestellten erfindungsgemäßen Vorrichtung 10 in einer Benutzungsstellung mit zueinander angewinkelten Bildschirmen 21, 22.

Die erfindungsgemäße Vorrichtung 10 weist eine Haltevorrichtung 14 auf, die zwei Halteelemente 141 und 142 aufweist. Die beiden Computer-Bildschirme 21 und 22 sind dabei jeweils mit einem der Halteelemente 141, 142 mittels jeweils zwei Scharniere 15 drehbar verbunden. Die beiden Halteelemente 141, 142 sind, wie in den Figuren 1 und 2 dargestellt, mittels weitere Scharniere 15 miteinander drehbar verbunden, so dass die Vorrichtung in einer Transportstellung zusammengeklappt werden kann. Die Bildschirme 21 und 22 können dann parallel zueinander gebracht werden.

Wie aus den Figuren 1 und 2 ersichtlich, weist die erfindungsgemäße Vorrichtung 10 weiterhin zwei Ständer 16, zum Abstellen der beiden Computer-Bildschirme 21, 22, auf, welche mit den jeweiligen Halteelementen 141, 142 drehbar verbunden sind. Eine andere Ausführungsform der Erfindung, die hier nicht gezeigt ist, sieht aber auch vor, dass die Ständer 16 starr mit den jeweiligen Halteelementen 141, 142 verbunden sind.

Des Weiteren ist eine Tragvorrichtung 18, 181 vorgesehen, welche aus zwei Haltegriffe 18 und zwei damit verbundenen Traghebel 181 besteht. Die Traghebel 181 sind mit den Halteelementen 141, 142 in diesem Ausführungsbeispiel festverbunden, wobei es sich versteht, dass auch eine lösbare Verbindung möglich ist.

Beim Zusammenklappen der beiden Computer-Bildschirme 21, 22 werden die Traghebel 181 und die Haltegriffe 18 zueinander korrespondierend angebracht, so dass die Haltegriffe mit einem minimalen Abstand zueinander gebracht werden können und leicht mit einer Hand greifbar werden.

In diesem Ausführungsbeispiel ist die die Haltevorrichtung 14 mit jeweils zwei einander gegenüberliegenden Halteelementen 141, 142 ausgebildet, wie in Fig. 2 gezeigt ist, so dass zwischen den Halteelementen 141, 142 jeweils eine Aufnahme zum Anbringen und Befestigen jeweils einer Elektrobox 122 geschaffen wird. In der Elektrobox 122, welche jeweils an der Rückseite der Computer-Bildschirme 21, 22 angebracht ist, können eine Dockingstation, ein Netzteil, eine Stromverteilerleiste, eine Steckerleiste, Kabel und weitere Elektrokomponente eingebracht werden.

Bei der in Fig. 2 gezeigten Ausführungsform sind die Elektroboxe 122 als geschlossene Module ausgebildet, die leicht ausgetauscht werden können.

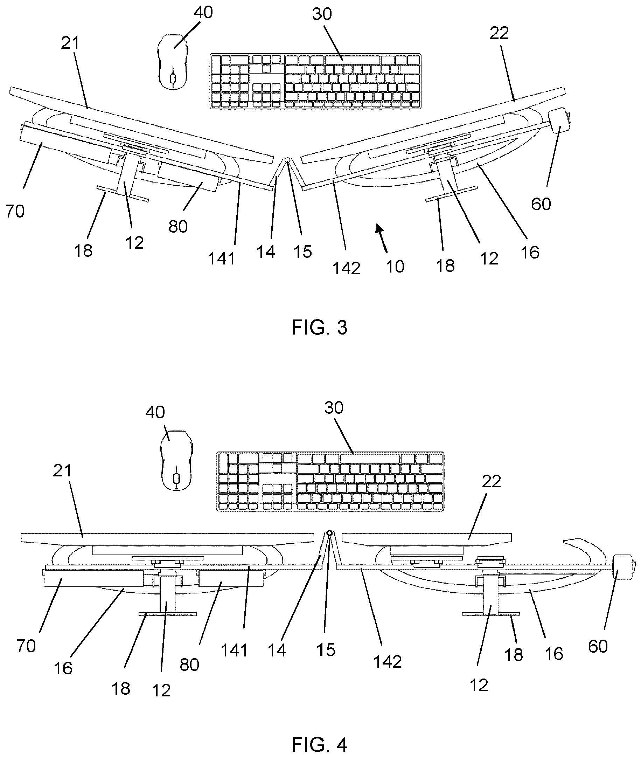

In Fig. 3 ist eine Draufsicht auf die erfindungsgemäße Vorrichtung 10 gemäß einer zweiten Ausführungsform der Erfindung gezeigt. Gemäß dieser Ausführungsform werden zwei Bildschirme 21, 22 mit der Vorrichtung 10 miteinander verbunden. Diese Figur zeigt die Bildschirme 21, 22 in einer Benutzungsstellung, so dass sie zueinander angewinkelt sind. Dabei sind eine Tastatur 30 und eine Maus 40 in einer Benutzungsstellung vor den Bildschirmen 21, 22 angeordnet und somit nicht mit der Vorrichtung 10 verbunden.

Fig. 4 zeigt eine Draufsicht auf die Vorrichtung gemäß Fig. 3 mit den Bildschirmen 21, 22 in einer Anordnung auf einer geraden Linie.

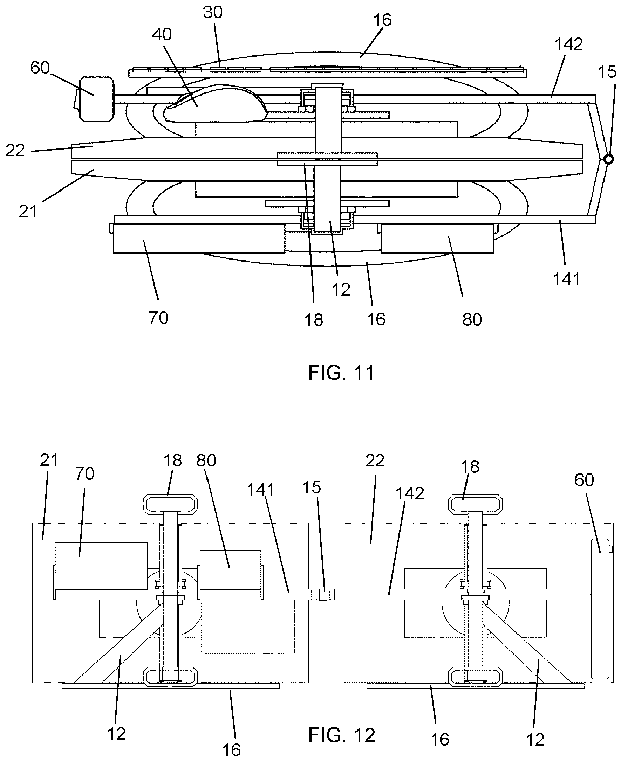

Wie aus den Figuren 3 und 4 ersichtlich, weist die erfindungsgemäße Vorrichtung 10, wie in der ersten Ausführungsform gemäß den Figuren 1 und 2, auch eine Haltevorrichtung 14 auf, die zwei Halteelemente 141 und 142 umfasst. Die Halteelemente 141 und 142 sind mittels eines Scharniers 15 drehbar miteinander verbunden. Eine rückwärtige Ansicht der Vorrichtung gemäß Fig. 4 ist in Fig. 12 gezeigt.

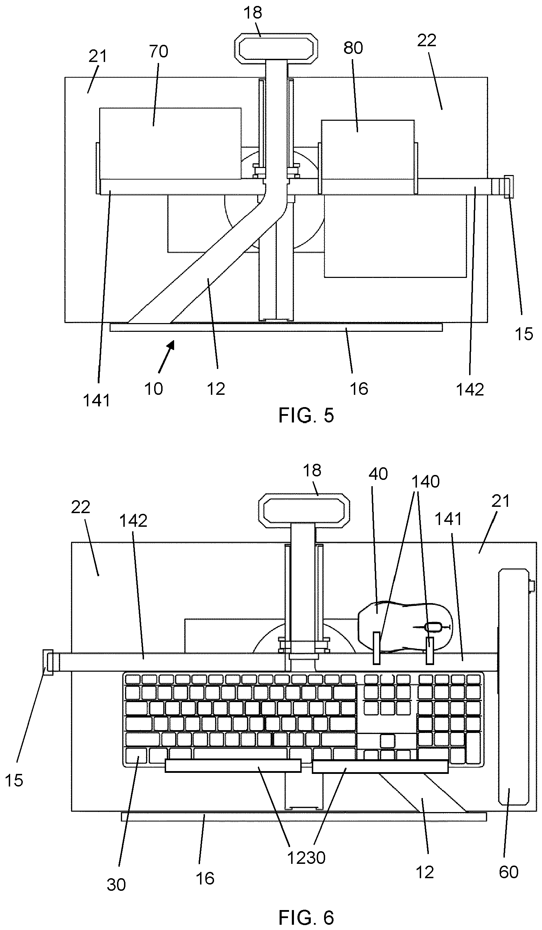

Das Scharnier 15 ist in Figur 5, welche eine rückwärtige Ansicht der Vorrichtung 10 gemäß der zweiten Ausführungsform in einer Transportstellung zeigt, und auch in Figur 6, welche eine Vorderansicht der Vorrichtung 10 gemäß der zweiten Ausführungsform in der Transportstellung zeigt, deutlich dargestellt.

Wie in Figur 5 gezeigt, sind ein Computer 70 und eine Dockingstation 80 auf der Rückseite des jeweiligen Bildschirms 21, 22 angeordnet. Die weiteren Komponenten, wie Tastatur 30, Maus 40 sowie eine Kontaktierungsvorrichtung 60 sind vorderseitig angeordnet. Dabei ist die Maus 40, wie in Figur 6 gezeigt in einer in dem Haltelement 141 vorgesehenen Ausnehmung 140 angebracht. Die Tastatur 30 ist in einer in den beiden Halteelementen 141 und 142 vorgesehenen Ausnehmungen 1230 angebracht.

Wie in Figur 5 dargestellt, ist der Haltegriff 18 mit einem Träger 12 festverbunden und erstreckt sich über den Bildschirmen 21, 22 in der Transportstellung, so dass die ganze Anordnung leicht transportierbar ist. Der Träger 12 ist am seiner gegenüberliegenden Seite fest mit einem Ständer 16 verbunden, wie der Figur 5 zu entnehmen ist.

Es ist aber durchaus möglich und leicht realisierbar, die Haltegriffe 15 beispielsweise mittels eines Scharniers mit dem jeweiligen Träger 12 zu verbinden, so dass die Haltegriffe 15 nur in der Transportposition über die Bildschirme 21, 22 hervorstehen und leicht zu greifen sind. In einer Arbeitsposition werden dann die Haltegriffe 15 gekippt, so dass sie optisch für den Benutzer nicht störend sind.

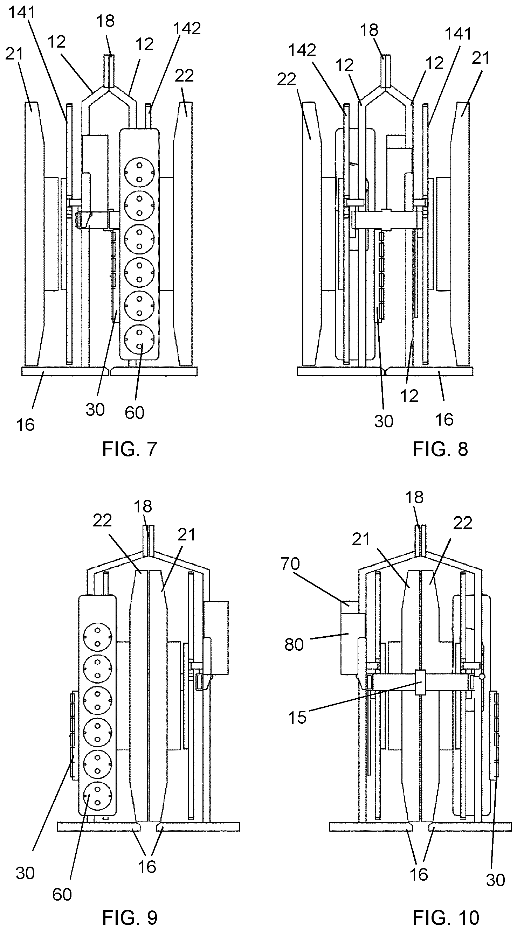

Figur 9 zeigt eine Seitenansicht der Vorrichtung 10 gemäß der zweiten Ausführungsform in einer Transportstellung mit nach innen weisenden Bildschirmen und Figur 10 zeigt eine Seitenansicht gemäß Fig. 9 von der gegenüberliegenden Seite. Aus diesen Figuren ist ersichtlich, dass die beiden zusammengeklappten und in der Transportstellung gebrachten Bildschirmen 21, 22 mit ihren jeweiligen Displays gegenüberliegend angeordnet sind, so dass einen minimalen Schutzabstand zwischen den Displays besteht und somit diese einerseits geschützt sind und andererseits die ganze Anordnung sehr kompakt ausgebildet ist. Eine Draufsicht der Vorrichtung 10 gemäß Figur 9 ist in Figur 11 gezeigt.

Die Figuren 7 und 8 zeigen in dieser Hinsicht eine dritte Ausführungsform der erfindungsgemäßen Vorrichtung in einer Transportstellung mit nach außen weisenden Bildschirmen 21, 22. Bei dieser Ausführungsform befinden sich die weiteren Computer-Peripheriegeräte, wie die Tastatur 30 und die Kontaktierungsvorrichtung 60, die in Fig. 7 gezeigt sind, zwischen den beiden Computer-Bildschirmen 21, 22.

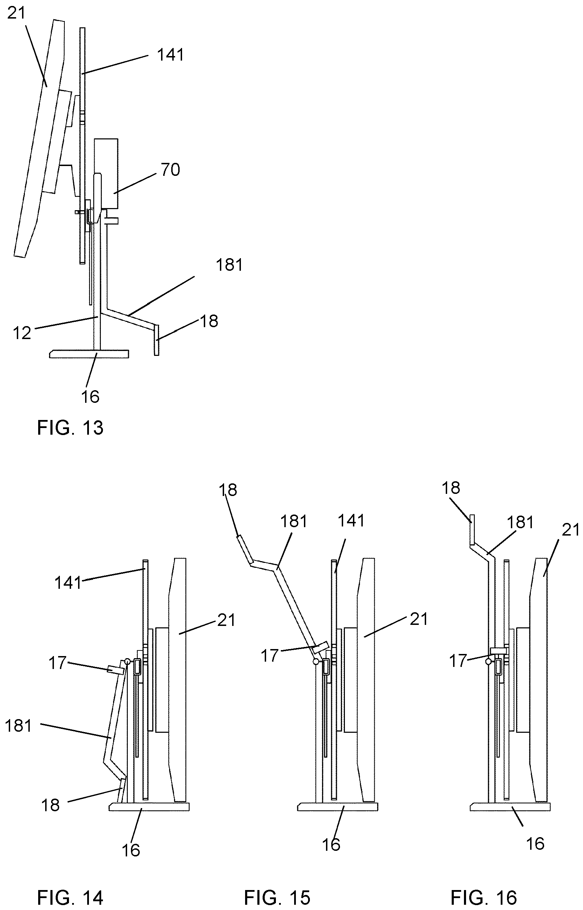

Figur 13 zeigt eine Seitenansicht einer Vorrichtung 10 mit einem daran befestigten Bildschirm 21 in einer Benutzungsstellung. Dabei weist eine Tragvorrichtung einen Traghebel 181 mit einem damit verbundenen Halteelement 18 auf. Wie aus dieser Figur ersichtlich, ist der Traghebel 181 nach unten geschwenkt, so dass auch das Halteelement 18 nach unten gerichtet ist.

Figur 14 zeigt eine Seitenansicht der erfindungsgemäßen Vorrichtung 10 mit dem daran befestigten Bildschirm 21, welcher abgesenkt und in Vorbereitung für eine Transportstellung ist.

Figur 15 zeigt die Vorrichtung gemäß Figur 14 mit teilweise nach oben geschwenktem Traghebel 181.

Figur 16 zeigt die Vorrichtung gemäß Figur 15 mit vollständig nach oben geschwenktem Traghebel 181 in der Transportstellung mit einer in Eingriff befindlichen Rastvorrichtung, welche ein Rastelement 17 aufweist. Dabei befindet sich das Rastelement 17 in einer Rastposition, so dass die Vorrichtung 10 arretiert und bereit für das Transportieren bzw. für das Abstellen ist.

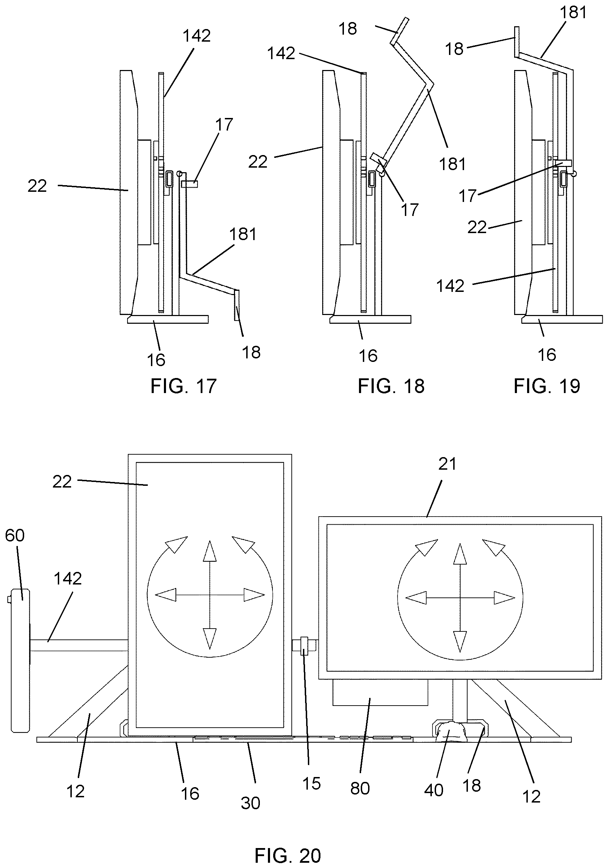

Figur 17 zeigt eine Seitenansicht der Vorrichtung 10 mit abgesenktem Bildschirm 22 in Vorbereitung einer Transportstellung. Figur 18 zeigt die Vorrichtung gemäß Figur 17 mit teilweise nach oben geschwenktem Traghebel 181 und Figur 19 zeigt die Vorrichtung 10 gemäß Figur 17 mit vollständig nach oben geschwenktem Traghebel 181 in der Transportstellung mit der sich im Eingriff befindlichen Rastvorrichtung.

Figur 20 zeigt eine rückwärtige Ansicht der erfindungsgemäßen Vorrichtung gemäß einer dritten Ausführungsform in Benutzungsstellung mit einer Darstellung der Schwenk- und Verschiebemöglichkeiten der Bildschirme 21 und 22. Die beiden Bildschirme 21 und 22 können in der Benutzungsstellung sowohl horizontal als auch vertikal mit der erfindungsgemäßen Vorrichtung 10 zueinander und weg voneinander verschoben werden.

Es ist zu bemerken, dass die vorliegende Erfindung nicht auf die obigen Ausführungsbeispielen beschränkt ist.

### BEZUGSZEICHENLISTE

- 10: Vorrichtung
- 12: Tragvorrichtung
- 1230: Aufnahme für die Tastatur
- 14: Haltevorrichtung
- 140: Aufnahme für die Maus
- 141, 142: Halteelement
- 15: Scharnier
- 16: Ständer
- 17: Rastvorrichtung
- 18: Haltegriff
- 181: Traghebel
- 19: Rastvorrichtung
- 21: erster Bildschirm
- 22: zweiter Bildschirm
- 30: Tastatur
- 40: Maus
- 50: Computer
- 60: Kontaktierungsvorrichtung
- 70: Computer
- 80: Dockingstation

## Patentansprüche

1. Vorrichtung zum Verbinden von elektronischen Geräten, insbesondere von Computer-Peripheriegeräten (21, 22, 30, 40, 50, 60, 70, 80), umfassend eine Haltevorrichtung (14) zum Verbinden von wenigstens zwei der Computer-Peripheriegeräte (21, 22, 30, 40, 50, 60, 70, 80), wobei die Haltevorrichtung (14) wenigstens zwei Halteelemente (141, 142) aufweist, **dadurch gekennzeichnet, dass** die wenigstens zwei Halteelemente (141, 142) an einem Ende jeweils mit einem der Computer-Peripheriegeräte (21, 22, 30, 40, 50, 60, 70, 80) und an einem anderen Ende derart drehbar miteinander verbunden sind, dass die Computer-Peripheriegeräte (21, 22, 30, 40, 50, 60, 70, 80) zusammenklappbar und mittels einer mit der Haltevorrichtung (14) verbindbaren Tragvorrichtung (12, 18, 181) tragbar sind.

2. Vorrichtung nach Anspruch 1, **dadurch gekennzeichnet, dass** die wenigstens eine Tragvorrichtung (12, 18, 181) fest mit der Haltevorrichtung (14) verbunden ist.

3. Vorrichtung nach Anspruch 1, **dadurch gekennzeichnet, dass** die wenigstens eine Tragvorrichtung (12, 18, 181) lösbar mit der Haltevorrichtung (14) verbunden ist.

4. Vorrichtung nach einem der vorhergehenden Ansprüche, **dadurch gekennzeichnet, dass** die wenigstens eine Tragvorrichtung (12, 18) wenigstens einen Haltegriff (18) zum Tragen der zusammengeklappten, tragbaren Vorrichtung (10) sowie wenigstens einen Träger (12) aufweist, wobei der Träger (12) an einem oberen Ende mit dem Haltegriff (18) und an einem unteren Ende mit einem Ständer (16), zum Abstellen des wenigstens einen der Computer-Peripheriegeräte, in Verbindung steht.

5. Vorrichtung nach einem der Ansprüche 1 bis 3, **dadurch gekennzeichnet, dass** die wenigstens eine Tragvorrichtung (12, 18, 181) wenigstens einen Haltegriff (18) zum Tragen der zusammengeklappten, tragbaren Vorrichtung (10) sowie wenigstens einen Traghebel (181) aufweist.

6. Vorrichtung nach Anspruch 5, **dadurch gekennzeichnet, dass** der wenigstens eine Haltegriff (18) mit dem wenigstens einen Traghebel (181), welcher seinerseits mit einem der Halteelemente (141, 142) in Verbindung steht, verbunden ist, wobei der Traghebel (181) insbesondere teleskopartig ausgebildet ist.

7. Vorrichtung nach Anspruch 5, **dadurch gekennzeichnet, dass** der Traghebel (181) und/oder der Haltegriff (18) zwischen einer Transportstellung und einer Benutzungsstellung der Vorrichtung (10) schwenkbar sind bzw. ist.

8. Vorrichtung nach einem der vorhergehenden Ansprüche, **dadurch gekennzeichnet, dass** die Haltevorrichtung (14) Ausnehmungen (120, 140, 1230) zum Aufnehmen und Befestigen der wenigstens zwei Computer-Peripheriegeräte (21, 22, 30, 40, 50, 60, 70, 80) aufweist.

9. Vorrichtung nach einem der vorhergehenden Ansprüche, **dadurch gekennzeichnet, dass** die Haltevorrichtung (14) geeignet ist, wenigstens zwei Bildschirme (20, 21) miteinander zu verbinden, wobei die wenigstens zwei Bildschirme (20, 21) in einer Transportstellung im Wesentlichen parallel zueinander ausgerichtet sind.

10. Vorrichtung nach einem der vorhergehenden Ansprüche, **dadurch gekennzeichnet, dass** die wenigstens zwei Halteelemente (141, 142) mittels eines Scharniers (15) drehbar miteinander verbunden sind.

11. Vorrichtung nach einem der vorhergehenden Ansprüche, **dadurch gekennzeichnet, dass** die Haltevorrichtung (14) wenigstens eine Rastvorrichtung (17) zur Sicherung einer Relativbewegung der Computer-Peripheriegerte (21, 22, 30, 40, 50, 60, 70, 80) zueinander und gegenüber der Haltevorrichtung (14) aufweist.

12. Vorrichtung nach Anspruch 7, **dadurch gekennzeichnet, dass** beim Bewegen des Traghebels (181) in die Transportstellung die wenigstens eine Rastvorrichtung (17) mit der Haltevorrichtung (14) und/oder mit dem Haltegriff (18) in Eingriff bringbar ist.

13. Vorrichtung nach einem der vorhergehenden Ansprüche, **dadurch gekennzeichnet, dass** die Haltevorrichtung (14) wenigstens eine Aufnahme (1230, 140) zur lösbaren Befestigung einer Tastatur (30), einer Maus (40), eines Computers (70), einer Dockingstation (80) und/oder einer elektrischen Kontaktierungsvorrichtung (60) aufweist.

14. Vorrichtung nach einem der Ansprüche 1 bis 7, **dadurch gekennzeichnet, dass** die Haltevorrichtung (14) wenigstens eine Aufnahme (120) zum Aufnehmen und Befestigen wenigstens einer Elektrobox (122), in welcher eine Dockingstation, ein Netzteil, eine Stromverteilerleiste, eine Steckerleiste, Kabel und weitere Komponente einbringbar sind, aufweist, wobei die Elektrobox (122) insbesondere einen modularen Aufbau aufweist.

15. Vorrichtung nach einem der vorhergehenden Ansprüche, **dadurch gekennzeichnet, dass** alle an der Haltevorrichtung (14) anbringbaren Peripheriegeräte (30, 40, 50, 70, 80) mit einer zentralen Stromversorgung verbindbar sind.

16. Vorrichtung nach einem der vorhergehenden Ansprüche, **dadurch gekennzeichnet, dass** die Haltevorrichtung (14) für eine Verschiebung in horizontaler und/oder vertikaler Richtung und/oder für eine Drehung und/oder ein Kippen wenigstens eines der Bildschirme (21, 22) ausgebildet ist, wobei die Bildschirme (21, 22) unabhängig voneinander auch geneigt werden können.
